# EUROPÄISCHE PATENTSCHRIFT

(11) **EP 3 723 268 B1**
(45) Veröffentlichungstag und Bekanntmachung des Hinweises auf die Patenterteilung: **01.05.2024**
(21) Anmeldenummer: 20163658.6
(22) Anmeldetag: 17.03.2020
(51) Int. Cl.: H02P 6/08, H02P 6/17, H02K 11/40, H02K 11/30, G08C 19/00

(54) **KOMPONENTENINTEGRIERTE SCHNITTSTELLE**
COMPONENT-INTEGRATED INTERFACE
INTERFACE INTÉGRÉE AU COMPOSANT

(30) Priorität: 11.04.2019 DE 102019109546
(43) Veröffentlichungstag der Anmeldung: 14.10.2020
(73) Patentinhaber: ebm-papst Landshut GmbH, 84030 Landshut (DE)
(72) Erfinder: Kleine, Volker, 49143 Bissendorf (DE); Holzner, Markus, 84164 Moosthenning (DE)
(74) Vertreter: Staeger & Sperling Partnerschaftsgesellschaft mbB

(56) Entgegenhaltungen:
- EP-A2- 2 528 228
- WO-A1-2004/114513
- DE-A1-102010 031 244
- DE-A1-102016 119 826

## Beschreibung

Die Erfindung betrifft eine Schnittstelle einer Kommutierungselektronik zur Regelung von Gleichstrommotoren, insbesondere von Gleichstrommotoren von Ventilatoren.

Drehzahlgeregelte bürstenlose Gleichstrommotoren werden in der Industrie vielfältig eingesetzt, beispielhaft in drehzahlvariablen Verbrennungsluftgebläsen für moderne Gasheizgeräte. Die Ansteuerung dieser Gebläse von einer Steuerelektronik geschieht vielfach über eine standardisierte PWM-Schnittstelle, in der die Steuerelektronik ein PWM-Signal erzeugt, das in der Regel der gewünschten Motorleistung des Gebläses entspricht, z. B. ein PWM-Signal mit einem Tastverhältnis von 10% bedeutet eine Motorleistung von 10% der maximalen Motorleistung. Dabei lässt sich der erforderliche Tastgrad entsprechend den Anforderungen von der Steuerelektronik steuern.

Die Steuerelektronik eines Gerätes ist dabei über eine Schnittstelle mit der Kommutierungselektronik zum Kommutieren des EC-Motors verbunden. Regelmäßig ist aus Schutzgründen zwischen der Steuerelektronik und der Kommutierungselektronik eine galvanische Trennung vorgesehen. Die galvanische Trennung kann dabei eingangsseitig im Schnittstellenbereich der Kommutierungselektronik angeordnet sein. Das PWM-Signal wird nach einer solchen galvanischen Trennung von einer im EC-Motor integrierten Elektronik erfasst und von der Motorkommutierungselektronik über einen Treiberbaustein in ein Ansteuersignal für die Motorwicklung umgewandelt.

Entsprechend der jeweiligen Last am Motor stellt sich eine bestimmte Drehzahl für das erhaltene Signal ein, die in der Regel über einen Hallsensor gemessen und über eine (weitere) galvanische Trennung hinaus an das Steuergerät übertragen wird. Das Steuergerät wertet diese Drehzahlinformation, die von den Hallsensoren der Kommutierungselektronik erhalten wird, aus und nimmt bei einer Abweichung zum Sollwert eine Anpassung des PWM-Signales vor.

Aufgrund der hohen Anzahl unterschiedlichster Applikationen wird versucht die Ansteuerung der Motoren über eine standardisierte PWM-Schnittstelle zu ermöglichen. Hierzu befindet sich die Kommutierungslektronik häufig direkt am Motor integriert. Das bedeutet aber, dass sich bei unterschiedlichen Motorleistungen die entsprechenden elektronischen Bauteile der Kommutierungslektronik unterscheiden. Betrachtet man ergänzend die Situation der Hersteller und Anwender, so ist es so, dass die Motorenhersteller motorenseitig die Kommutierungselektronik mit einer Schnittstelle für die Ansteuerelektronik bereitstellen. Die Ansteuerelektronik wiederum erfolgt kundenseitig oder von einem Dritten, regelmäßig aber nicht von dem Motorenhersteller. So stellt z. B. der Hersteller einer Kesselsteuerung die Ansteuerung für die Kommutierungselektronik des Motors eines Ventilators bereit, der im Heizkessel verwendet wird. Somit ergibt sich eine Schnittstelle zwischen der motorseitigen Kommutierungselektronik und der anwenderseitigen Steuerungselektronik. Wenn z. B. Kesseltypabhängig das Sollwertsignal für den Ventilator als PWM-Signal vorgegeben ist, muss der Motorhersteller dieses in eine entsprechende Drehzahl umsetzen.

Um die Vielfalt der Kombinationsmöglichkeiten abzudecken, ist eine Vielzahl von Doppelfunktionen in den Steuerungen vorhanden.

Befindet sich die Kommutierungslektronik am Motor, sind bei unterschiedlichen erforderlichen Motorleistungen die entsprechenden elektronischen Bauteile unterschiedlich auf der Seite der Motorsteuerung, die Ansteuerelektronik (d. h. Kundenseite) wie zum Beispiel eine Kesselsteuerung bleibt aber prinzipiell gleich, da die Solldrehzahl als PWM-Signal vorgegeben wird.

Somit sind die Steuerungen insgesamt nicht optimiert und auch teuer und aufwendig.

Ein weiterer Nachteil besteht darin, dass bei Ausführen mit am Motor integrierter Kommutierungselektronik die Anschlusskabel für die Netzspannung und Steuersignale durch ihr Gewicht und ihre Steifigkeit die Schwingungsdämpfer des Motors belasten und die Schwingungseigenschaften beeinflussen.

Wünschenswert wären daher eine Reduzierung der Anschlussleitungen zwischen einem Steuergerät und der Kommutierungselektronik sowie eine Reduzierung der Kosten benötigter elektronischer Bauteile in der Ansteuerelektronik und Kommutierungselektronik. Weiter wäre es wünschenswert das Variantenmanagement für Gebläse mit unterschiedlichen (elektrischen) Leistungen derart zu vereinfachen, dass es keine anwenderseitige Adaption der Ansteuerelektronik erfordert.

Eine naheliegende technische Lösung bestünde in der kompletten Integration aller elektronischen Funktionen der Kommutierungselektronik der Motoren von z. B. Lüftern direkt in die applikationsseitige Steuerelektronik. Gerade das ist aber nicht gewünscht für EC-Motoren mit integrierter Kommutierungselektronik.

Weiter nachteilig ist der Umstand, dass von der Steuerelektronik dann an den Motor schnelle Schaltsignale übertragen werden müssen, die insbesondere bei langen Leitungen über die Leitungslänge Störstrahlung aussenden können und wiederum umfangreiche und kostenintensive Entstörmaßnahmen und EMV-Schutzmaßnahmen erforderlich machen. Weiterhin müsste dazu die Steuerelektronik an den jeweiligen Motor angepasst werden: z.B. an die elektrische Leistungsaufnahme des Motors. Somit entsteht eine hohe Varianz bei den applikationsseitigen Steuergeräten, was unerwünscht und teuer ist.

Ferner offenbart EP 2 528 228 A2 eine Vorrichtung zur Steuerung eines Elektromotors in einem Kraftfahrzeug mittels eines elektronischen Steuergeräts. Die Vorrichtung umfasst das Steuergerät, eine erste Leitung, über die eine elektrische Energie an eine Ansteuerschaltung des Motors angelegt wird, und eine zweite Leitung , über die die Ansteuerschaltung auf Masse liegt, und wobei die Vorrichtung Mittel zur Übertragung eines Ansteuersignals mit Informationen bezüglich einer gewünschten Geschwindigkeit des Elektromotors von dem Steuergerät an den die Ansteuerschaltung und Mittel zur Übertragung eines Funktionszustandssignals mit Informationen bezüglich einer Funktion des Elektromotors von der Ansteuerschaltung an das Steuergerät aufweist. Um die Anzahl der erforderlichen Leitungen zu reduzieren und gleichzeitig den vollen Funktionsumfang der Ansteuerung des Elektromotors aufrechtzuerhalten, wird vorgeschlagen, dass die Mittel zur Übertragung des Ansteuersignals und die Mittel zur Übertragung des Funktionszustandssignals als eine gemeinsame Leitung ausgebildet sind. Weitere Motorsteuerungen sind aus DE 10 2016 119826 A1 und WO 2004/114513 A1 bekannt. 1

Der Erfindung liegt daher die Aufgabe zugrunde, vorbesagte Nachteile zu überwinden und eine optimierte und verbesserte PWM-Schnittstelle zwischen einer Steuerelektronik und einer Kommutierungselektronik eines EC-Motors vorzuschlagen, die dennoch ein hohes Maß an Flexibilität ermöglicht.

Die Aufgabe wird erfindungsgemäß durch die Merkmale des Anspruchs 1 gelöst.

Ein Grundgedanke der Erfindung besteht in einer PWM-Schnittstelle zwischen dem Steuergerät und Motorelektronik in der insbesondere die galvanische Trennung zwischen Steuergerät und Motorelektronik, so angeordnet wird, dass nur noch drei Verbindungsleitungen der Schnittstelle benötigt werden. Besonders vorteilhaft ist es, wenn diese nur auf einem gemeinsamen Spannungspotential gegenüber einem Referenzpotential liegen.

Erfindungsgemäß sind die Verbindungsleitungen der Schnittstelle zur Spannungsversorgung und zur Übertragung eines PWM-Signals so ausgebildet, dass eine der drei Verbindungsleitungen als bi-direktionale Kommunikationsleitung ausgebildet ist, um ein PWM-Signal zur Drehzahlregelung des EC-Motors an die Kommutierungselektronik zu übertragen.

Durch eine geeignete Funktionsaufteilung der Steuerelektronik und Kommutierungselektronik der Motorelektronik ist es auch möglich nur langsame Signale (Soll-Wertsignale für die Drehzahl) zu übertragen

Langsame Signale im Sinne der vorliegenden Erfindung sind solche Signale, die um wenigstens den Faktor 8, vorzugsweise den Faktor 10 unter der Übertragungsgeschwindigkeit der PWM-Signale liegen (z. B. SollwertSignale 2 kHz und PWM-Signale 200 kHz).

Erfindungsgemäß ist vorgesehen, dass nur die Steuerungselektronik über einen Netzspannungsanschluss verfügt, während die Motorsteuerung über die Schnittstelle mit der benötigten Spannung versorgt wird.

Erfindungsgemäß stellt die Steuerungselektronik über einen Gleichrichter eine gleichgerichtete Spannung, vorzugsweise gefilterte und gesiebte Gleichspannung für die Motorelektronik bereit. Hierzu stellt die Schnittstelle zwei Verbindungen für das Bezugspotential und das Gleichspannungspotential bereit.

Hierbei ist mit Vorteil vorgesehen, dass eine Schnittstellenverbindung das Bezugspotential, das am Ausgang des Gleichrichters aus einer Netzspannung, die am Netzspannungsanschluss anliegt, gebildet wird, der Motorelektronik bereitstellt. Durch diese Maßnahme kann bereits ein aufwändiges Schaltnetzteil bzw. zusätzlicher Gleichrichter eingespart werden.

Es ist in einer bevorzugten Ausgestaltung der Erfindung ferner vorgesehen, das Bezugspotential über die Schnittstellenverbindung der Schnittstelle einem Treiberbaustein der Motorelektronik direkt zuzuführen, was eine besonders kompakte und kostengünstige Lösung ermöglicht.

Gemäß einer vorteilhaften Ausführungsform der vorliegenden Erfindung ist vorgesehen, dass die Steuerungselektronik ferner eine galvanische Trenneinrichtung, vorzugsweise ausgebildet als Optokoppler, besitzt, von der eine Schnittstellenverbindung zur Übertragung des Sollwertsignals für die Drehzahlregelung zur Motorelektronik führt. Dabei ist es besonders von Vorteil, wenn eine oder die vorgenannte Schnittstellenverbindung zur Übertragung des Soll-Wertsignals für die Drehzahlregelung als eine bi-direktionale Verbindung ausgebildet ist, um erfasste Ist-Wertsignale der Drehzahl des Motors von der Motorelektronik über die gleiche Verbindung (mit entgegengesetzter Signalflussrichtung) an die Steuerungselektronik zu übertragen. Je nach Signalaufbereitung der Soll- und Ist-Wertsignale lässt sich eine synchrone Datenkommunikation realisieren.

Es ist weiter mit Vorteil vorgesehen, wenn die zuvor genannte bi-direktional ausgelegte Schnittstellenverbindung zur Übertragung des Soll-Wertsignals direkt an eine Kommutierungselektronik der Motorsteuerung ausgebildet ist. Auf diese Weise kann das Soll-Wertsignal z. B. über den Optokoppler auf die besagte bi-direktionale Verbindungsleitung ausgegeben werden und über die Schnittstelle der Kommutierungselektronik unmittelbar zugeführt werden, die das Signal zur Kommutierung verarbeitet und über einen Treiberbaustein als Steuersignal dem Motor zugeführt wird.

Mit der Idee der vorliegenden Erfindung erfolgt eine räumliche und funktionale Aufteilung, wodurch die Steuerungselektronik und die Motorelektronik auf räumlich voneinander vollständig getrennten Leiterplatten angeordnet sind und nur über die Schnittstelle miteinander elektrisch und signaltechnisch verbunden sind, allerdings auf gemeinsame Systemressourcen zugreifen können oder diese nutzen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt.

Es zeigen:
- Fig. 1: eine aus dem Stand der Technik bekannte schematische Schaltungsanordnung mit einer externen Steuerung, einer Schnittstelle und einer Motorsteuerung und
- Fig. 2: eine erfindungsgemäße Schaltungsanordnung mit einer externen Steuerung, einer Schnittstelle und einer Motorsteuerung.

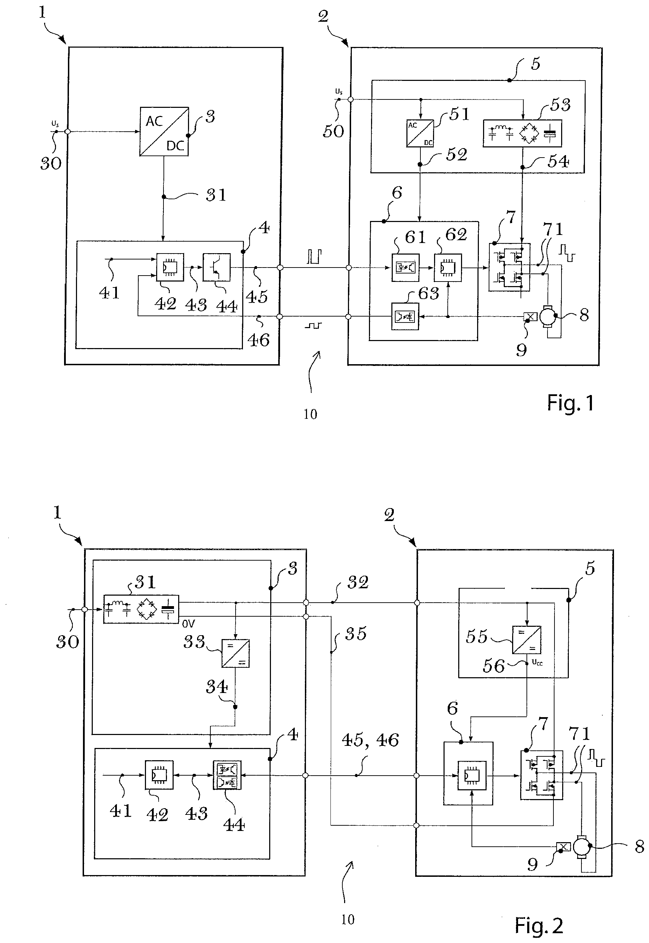

Im Folgenden wird die Erfindung mit Bezug auf die Figuren 1 und 2 näher erläutert.

Die Figur 1 zeigt eine aus dem Stand der Technik bekannte schematische Schaltungsanordnung mit einer externen Steuerungselektronik 1, einer Schnittstelle 10 und einer Motorsteuerung 2 für den EC-Motor 8 eines Gebläses.

In der Steuerungselektronik 1 wird herkömmlich ein PWM-Signal erzeugt und über die Verbindungsleitung 45 erzeugt und nach einer galvanischen Trennung 61 von der im Gebläse integrierten Motorelektronik 2 erfasst und von der Motorkommutierungselektronik 62 über einen Motortreiber (Treiberbaustein) 7 in ein Ansteuersignal 71 für den Motor 8 umgewandelt.

Entsprechend der jeweiligen Last des Gebläses entsteht eine Drehzahl, die in der Regel über einen Hallsensor 9 gemessen und über eine galvanische Trennung 63 an das Steuerungselektronik 1 über die Schnittstelle 10 und zwar die Verbindungsleitung 46 übertragen wird. Das Steuergerät wertet diese Drehzahlinformation aus.

Bei der Anordnung nach Figur 1 besitzt sowohl die externe Steuerungselektronik 1 einen Netzspannungsanschluss 30 und auch die Motorelektronik 2 einen Netzspannungsanschluss 50. Es sind eine galvanische Trennung 61 und eine zweite galvanische Trennung 63 in der Motorsteuerung 2 vorgesehen. Die eine galvanische Trennung 61 dient der Trennung der Übertragungsstrecke von der Steuerungselektronik 1 zur Motorsteuerung 2 und die zweite galvanische Trennung 63 ist erforderlich zur Trennung der Übertragungsstrecke der Drehzahlübertragung an die Steuerungselektronik 1. Ferner stellt die Steuerungselektronik 1 eine interne Versorgungsspannung 31 bereit und wird diese am Eingang des Spannungswandlers 4 eingespeist. In ähnlicher Weise stellt der Spannungswandler 51 eine interne Versorgungsspannung 52 der Motorkommutierungselektronik bereit.

Die Regelungselektronik 4 erzeugt mittels des Drehzahlreglers 42 über eine Treiberstufe 44 aus der Soll-Drehzahl 41 das PWM-Signal für die Drehzahlregelung des Motors 8. Die Regelungselektronik 4 erhält ferner die IstDrehzahl über die Rückleitung 46. Hierzu ist ein Drehzahlgeber 9 (Hallsensor) vorgesehen.

Im Vergleich dazu zeigt die Figur 2 eine Ausführungsform einer erfindungsgemäßen Schaltungsanordnung, ebenfalls mit einer externen Steuerung 1, einer Schnittstelle 10 und einer Motorsteuerung 2. Gleiche Bezugszeichen in den Figuren zeigen auf gleiche strukturelle bzw. funktionale Merkmale hin. Wie zu erkennen ist, benötigt diese Anordnung lediglich einen Netzanschluss 30 an der Steuerungselektronik 1.

Die Schnittstelle 10 umfasst drei Schnittstellenverbindungen 32, 35 und (45, 46) zwischen der Steuerungselektronik 1 und einer Motorelektronik 2, wobei die Spannungsversorgung der Steuerungselektronik 1 als gleichgerichtete Netzspannung der Motorelektronik 2 über die Schnittstellenverbindung 32 zugeführt wird. Die Schnittstellenverbindungen 32, 45 zwischen der Steuerungselektronik 1 und der Motorelektronik 2 befinden sich auf einem gemeinsamen relativen Spannungspotential gegenüber dem Bezugspotential an der Schnittstellen-verbindung 35. Ferner benötigt die so ausgelegte Anordnung dadurch auch nur eine galvanische Trenneinrichtung 44. Das Bezugszeichen 46 betrifft die gleiche Verbindungsleitung, wie das Bezugszeichen 45 und stellt eine bi-direktionale Verbindungsleitung als Kommunikationsverbindung dar.

Das aus dem Stand der Technik bekannt PWM-Signal mit Drehzahlrückmeldung wird in der Ausführung nach Figur 2 ersetzt durch diese bidirektionale Kommunikationsschnittstellenverbindung 45, 46 zwischen der Regelungselektronik 4 und Motorkommutierungselektronik 6, die sowohl den Drehzahlsollwert wie auch den Ist-Wert vom Drehzahlgeber 9 des Motors 8 digital überträgt. Da nicht mehr kontinuierlich ein PWM-Signal mit steilen Flanken übertragen werden muss, sondern lediglich ein Soll-Wert für die Drehzahl, der von der Kommutierungselektronik 6 über den Motortreiber 7 direkt in ein Steuersignal 71 für den Motor 8 umgesetzt wird, können vergleichsweise langsame Signale übertragen werden. Das ermöglicht auch die Verwendung von langsameren preiswerteren Optokoppler für die galvanische Trennung. Dabei ist der Spannungsbezug über die Verbindung 35 für die Kommunikationsschnittstelle der gleiche wie für die gleichgerichtete Netzspannung an der Verbindung 32. Die galvanische Trennung geschieht in der Weise, dass das Kommunikationssignal netzspannungsgebunden ist, das heißt es kann über das gleiche Kabel geführt werden, wie die Versorgungsspannung der Motorelektronik 2. Es kommt zu keiner Durchmischung von Kleinspannungs- und Netzspannungssignalen und die Kommunikation erfordert somit nur eine zusätzliche Verbindungsleitung.

## Patentansprüche

1. Einrichtung bestehend aus einer Steuerungselektronik (1) eines Gerätes umfassend eine Regelungselektronik (4) und eine Motorelektronik (2) eines EC-Motors (8) und einer Schnittstelle zwischen der Steuerungselektronik (1) und der davon galvanisch getrennten Motorelektronik (2) , die eine Motorkommutierungselektronik (6) umfasst, wobei die Schnittstelle mit genau drei Verbindungsleitungen (32, 35, 45) zwischen der Steuerungselektronik (1) und der Motorelektronik (2) zur Spannungsversorgung und zur Übertragung eines PWM-Signals ausgebildet ist, wobei eine der drei Verbindungsleitungen als bi-direktionale Kommunikationsleitung und zwar als eine bidirektionale Kommunikationsverbindung (45) zwischen der Regelungselektronik (4) und der Motorkommutierungselektronik (6) vorgesehen ist, um ein PWM-Signal zur Drehzahlregelung des EC-Motors (8) zu übertragen, wobei nur die Steuerungselektronik (1) über einen Netz(wechsel)spannungsanschluss (30) verfügt und durch einen Gleichrichter (30) die Netzspannung in eine gleichgerichtete Versorgungsspannung für die Motorelektronik (2) bereitstellt.

2. Einrichtung gemäß Anspruch 1, **dadurch gekennzeichnet, dass** die Verbindungsleitungen (32, 35, 45) auf einem gemeinsamen Spannungspotential liegen.

3. Einrichtung gemäß einem der Ansprüche 1 oder 2, **dadurch gekennzeichnet, dass** eine Verbindungsleitung (35) das Bezugspotential, das am Ausgang des Gleichrichter (30) aus einer Netzspannung am Netzspannungsanschluss (30) gebildet wird, der Motorelektronik (2) bereitstellt.

4. Einrichtung gemäß Anspruch 3, **dadurch gekennzeichnet, dass** das Bezugspotential über die Verbindungsleitung (35) der Schnittstelle einem Treiberbaustein (7) der Motorelektronik (2) zugeführt wird.

5. Einrichtung gemäß einem der vorhergehenden Ansprüche, **dadurch gekennzeichnet, dass** die Steuerungselektronik (1) eine galvanische Trenneinrichtung (44), vorzugsweise ausgebildet als Optokoppler, besitzt, von der eine Verbindungsleitung (44, 45) zur Übertragung eines Sollwertsignals für die Drehzahlregelung zur Motorelektronik (2) führt.

6. Einrichtung gemäß Anspruch 5, **dadurch gekennzeichnet, dass** eine der Verbindungsleitungen (44, 45) zur Übertragung des Soll-Wertsignals für die Drehzahlregelung als bidirektionale Verbindung ausgebildet ist, um erfasste Ist-Wertsignale der Drehzahl des Motors (8) von der Motorelektronik (2) an die Steuerungselektronik (1) zu übertragen.

7. Einrichtung gemäß einem der vorhergehenden Ansprüche, **dadurch gekennzeichnet, dass** die bi-direktional ausgelegte Verbindungsleitung (44, 45) aus Anspruch 6 zur Übertragung des Soll-Wertsignals direkt an eine Kommutierungselektronik (6) der Motorsteuerung (2) ausgebildet ist.

8. Einrichtung gemäß einem der vorhergehenden Ansprüche 5 bis 7, **dadurch gekennzeichnet, dass** einem Treiberbaustein (7) der Motorelektronik (2) das Soll-Wertsignal für die Drehzahl über die in der Motorsteuerung (2) vorgesehene Kommutierungselektronik (6) zugeführt wird.

9. Einrichtung gemäß einem der vorhergehenden Ansprüche, **dadurch gekennzeichnet, dass** die Steuerungselektronik (1) und die Motorelektronik (2) auf räumlich voneinander vollständig getrennten Leiterplatten angeordnet sind und nur über die Schnittstelle miteinander elektrisch und signaltechnisch verbunden sind.

10. Einrichtung gemäß einem der vorhergehenden Ansprüche in Kombination mit Anspruch 5, **dadurch gekennzeichnet, dass** die Übertragungsgeschwindigkeit der SollwertSignale, um wenigstens den Faktor 8, vorzugsweise den Faktor 10 unter der Übertragungsgeschwindigkeit der PWM-Signale liegen.

## Claims

1. An apparatus, consisting of control electronics (1) of a device, comprising feedback control electronics (4) and motor electronics (2) of an EC motor (8), and an interface between the control electronics (1) and the motor electronics (2) galvanically isolated therefrom, which comprises motor commutation electronics (6), wherein the interface is configured with exactly three connecting lines (32, 35, 45) between the control electronics (1) and the motor electronics (2) for voltage supply and for transmission of a PWM signal, wherein one of the three connecting lines is provided as a bidirectional communication line, that is as a bidirectional communication connection (45) between the feedback control electronics (4) and the motor commutation electronics (6), to transmit a PWM signal for rotational speed feedback control of the EC motor (8), wherein only the control electronics (1) has a mains (alternating) voltage connection (30) and provides the mains voltage via a rectifier (30) into a rectified supply voltage for the motor electronics (2).

2. The apparatus according to claim 1, **characterized in that** the connecting lines (32, 35, 45) are at a common voltage potential.

3. The apparatus according to any one of claims 1 or 2, **characterized in that** a connecting line (35) provides the reference potential, which is formed at the output of the rectifier (30) from a mains voltage at the mains voltage connection (30), to the motor electronics (2).

4. The apparatus according to claim 3, **characterized in that** the reference potential is supplied to a driver module (7) of the motor electronics (2) via the connecting line (35) of the interface.

5. The apparatus according to any one of the preceding claims, **characterized in that** the control electronics (1) possess a galvanic isolation means (44), preferably configured as an optocoupler, from which a connecting line (44, 45) leads to the motor electronics (2) for transmission of a target value signal for the rotational speed feedback control.

6. The apparatus according to claim 5, **characterized in that** one of the connecting lines (44, 45) for transmission of the target value signal for the rotational speed feedback control is configured as a bidirectional connection to transmit acquired actual value signals of the rotational speed of the motor (8) from the motor electronics (2) to the control electronics (1).

7. The apparatus according to any one of the preceding claims, **characterized in that** the bidirectionally designed connecting line (44, 45) of claim 6 is configured for transmission of the target value signal directly to commutation electronics (6) of the motor controller (2).

8. The apparatus according to any one of claims 5 to 7, **characterized in that** the target value signal for the rotational speed is supplied to a driver module (7) of the motor electronics (2) via the commutation electronics (6) provided in the motor controller (2).

9. The apparatus according to any one of the preceding claims, **characterized in that** the control electronics (1) and the motor electronics (2) are arranged on printed circuit boards spatially completely separate from one another and are connected electrically and signally to one another only via the interface.

10. The apparatus according to any one of the preceding claims in combination with claim 5, **characterized in that** the transmission speed of the target value signals is less than the transmission speed of the PWM signals by at least a factor of 8, preferably by a factor of 10.

## Revendications

1. Dispositif composé d'une électronique de commande (1) d'un appareil comprenant une électronique de régulation (4) et une électronique de moteur (2) d'un moteur à commutation électronique (EC) (8), et d'une interface entre l'électronique de commande (1) et l'électronique de moteur (2) isolée galvaniquement de celle-ci et qui comprend une électronique de commutation de moteur (6), dans lequel l'interface est réalisée avec exactement trois lignes de raccordement (32, 35, 45) entre l'électronique de commande (1) et l'électronique de moteur (2) pour l'alimentation en tension et pour la transmission d'un signal MIL, dans lequel l'une des trois lignes de raccordement est prévue comme une ligne de communication bidirectionnelle, notamment comme une liaison de communication bidirectionnelle (45), entre l'électronique de régulation (4) et l'électronique de commutation de moteur (6) pour transmettre un signal MIL pour la régulation de la vitesse de rotation du moteur EC (8), dans lequel seule l'électronique de commande (1) dispose d'une borne de tension (alternative) de réseau (30) et fournit par l'intermédiaire d'un redresseur (30) la tension de réseau dans une tension d'alimentation redressée pour l'électronique de moteur (2).

2. Dispositif selon la revendication 1, **caractérisé en ce que** les lignes de raccordement (32, 35, 45) sont sur un potentiel de tension commun.

3. Dispositif selon l'une quelconque des revendications 1 ou 2, **caractérisé en ce qu'**une ligne de raccordement (35) fournit à l'électronique de moteur (2) le potentiel de référence qui est formé à la sortie du redresseur (30) à partir d'une tension de réseau au niveau de la borne de tension de réseau (30).

4. Dispositif selon la revendication 3, **caractérisé en ce que** le potentiel de référence est amené à un module d'attaque (7) de l'électronique de moteur (2) par l'intermédiaire de la ligne de raccordement (35) de l'interface.

5. Dispositif selon l'une quelconque des revendications précédentes, **caractérisé en ce que** l'électronique de commande (1) dispose d'un dispositif d'isolation galvanique (44), de préférence réalisé sous forme d'optocoupleur, à partir duquel une ligne de raccordement (44, 45) mène à l'électronique de moteur (2) pour transmettre un signal de valeur de consigne pour la régulation de vitesse de rotation.

6. Dispositif selon la revendication 5, **caractérisé en ce que** l'une des lignes de raccordement (44, 45) est réalisée comme une liaison bidirectionnelle pour transmettre le signal de valeur de consigne pour la régulation de vitesse de rotation afin de transmettre des signaux de valeur réelle de la vitesse de rotation du moteur (8) de l'électronique de moteur (2) à l'électronique de commande (1).

7. Dispositif selon l'une quelconque des revendications précédentes, **caractérisé en ce que** la ligne de raccordement (44, 45) conçue de manière bidirectionnelle selon la revendication 6 est réalisée pour transmettre le signal de valeur de consigne directement à une électronique de commutation (6) de la commande de moteur (2).

8. Dispositif selon l'une quelconque des revendications précédentes 5 à 7, **caractérisé en ce que** le signal de valeur de consigne pour la vitesse de rotation est amené à un module d'attaque (7) de l'électronique de moteur (2) par l'intermédiaire de l'électronique de commutation (6) prévue dans la commande de moteur (2).

9. Dispositif selon l'une quelconque des revendications précédentes, **caractérisé en ce que** l'électronique de commande (1) et l'électronique de moteur (2) sont disposées sur des cartes de circuits imprimés physiquement complètement séparées l'une de l'autre et ne sont reliées électriquement l'une à l'autre en technique de signal que par l'interface.

10. Dispositif selon l'une quelconque des revendications précédentes en combinaison avec la revendication 5, **caractérisé en ce que** la vitesse de transmission des signaux de valeur de consigne est inférieure à la vitesse de transmission des signaux MIL au moins d'un facteur 8, de préférence d'un facteur 10.
